Europäisches Patentamt

European Patent Office

Office européen des brevets

(19)

(11) Veröffentlichungsnummer: **0 246 662**
**B1**

(12) **EUROPÄISCHE PATENTSCHRIFT**

(45) Veröffentlichungstag der Patentschrift: **16.01.91**

(51) Int. Cl.⁵: **H 04 B 10/00**

(21) Anmeldenummer: **87107506.5**

(22) Anmeldetag: **22.05.87**

(54) **Empfänger für optische Digitalsignale mit unterschiedlicher Amplitude.**

(30) Priorität: **23.05.86 DE 3617331**

(43) Veröffentlichungstag der Anmeldung:
**25.11.87 Patentblatt 87/48**

(45) Bekanntmachung des Hinweises auf die
Patenterteilung:
**16.01.91 Patentblatt 91/03**

(84) Benannte Vertragsstaaten:
**AT BE CH DE FR GB IT LI NL SE**

(56) Entgegenhaltungen:
**DE-A-2 310 789**
**GB-A-2 083 963**

**NAECON 1981, PROCEEDINGS OF THE IEEE
1981, NATIONAL AEROSPACE AND
ELECTRONICS CONFERENCE, 19.-21. Mai 1981,
Band 3, Seiten 1319-1323, IEEE, New York, US;
D.R. PORTER et al.: "Optical data bus receiver
for MIL-STD-1553B"**

(73) Patentinhaber: **Siemens Aktiengesellschaft
Wittelsbacherplatz 2
D-8000 München 2 (DE)**

(72) Erfinder: **Toussaint, Hans-Norbert, Dr.-Ing.
Karlsbergstrasse 41
D-8000 München 71 (DE)**

Courier Press, Leamington Spa, England.

**Beschreibung**

Die Erfindung betrifft einen Emfänger für optische Digitalsignale gemäß dem Oberbegriff des Patentanspruchs 1.

Solche Empfänger für optische Digitalsignale enthalten meist einen an eine Fotodiode angekoppelten Transimpedanz-Verstärker, sowie einen nachgeschalteten Komparator, der entsprechend den empfangenen Lichtimpulsen Spannungsimpulse abgibt. Hierbei nimmt beispielsweise der Komparatorausgang die logische "1" an, wenn die Fotodiode belichtet wird, bzw. umgekehrt.

Die von solchen Empfängern empfangenen optischen Signale kommen meist mit unterschiedlich großem Leistungspegel an, da sie beispielsweise unterschiedlich lange LWL-Übertragungsstrecken und/oder Lichtwellenleiter mit voneinander verschiedener Dämpfung durchlaufen haben. Auch kann die Strahlungsleistung der jeweils verwendeten Sendedioden voneinander abweichen. Es ist jedenfalls erwünscht, daß ein solcher Empfänger im Leistungspegel stark voneinander abweichende optische Signale ohne Übersteuerung verarbeiten kann.

Aus der Europäischen Patentanmeldung 0 052 221 ist ein Transimpedanz-Verstärker bekannt, der durch einen Operationsverstärker realisiert ist. Bei optischen Digitalsignalen mit großem Leistungspegel werden die Eingänge des dem Operationsverstärker nachgeschalteten Komparators übersteuert. Diese Übersteuerung führt zu einem verzögerten Umschalten auf einen anderen Signalzustand am Ausgang des Komparators. Hierdurch kommt es zu einer störenden Pulsverzerrung des Ausgangssignals.

Es ist denkbar, den Ausgang des Transimpedanz-Verstärkers über einen Kondensator mit dem Eingang des Komparators zu koppeln. Pulsverzerrungen können zwar auf diese Weise klein gehalten werden, wegen der nicht vorhandenen Gleichstromkopplung ist jedoch kein eindeutiger Zusammenhang zwischen Eingangs- und Ausgangssignal des Empfängers gegeben.

Schließlich sind noch aufwendige Empfänger mit automatischer Verstärkungsregelung möglich. Damit diese Verstärkungsregelung ihre Aufgabe erfüllen kann, muß der Sender quasikontinuierlich senden, d.h. es müssen entweder Forderungen an das Tastverhältnis gestellt werden, oder der Sender muß sonstige Hilfssignale aussenden, die vom Empfänger zur Pegelregelung ausgenutzt werden können. Ein weiterer Nachteil ergibt sich häufig dadurch, daß die Regelung nicht schnell genug anspricht, wenn z.B. Daten von verschiedenen Sendern "paketweise" an einen Empfänger gesendet werden.

Ein Transimpedanz-Verstärker, der drei, jeweils einen Transistor aufweisende Verstärkerstufen aufweist, von denen die erste in Kollektor-Basisschaltung und die zweite in Emitter-Basisschaltung betrieben ist, und bei dem der Transistor der dritten Verstärkerstufe wenigstens emitterseitig eine Lastimpedanz aufweist und zwischen dem eingangsseitigen Basisanschluß des Verstärkers und einem Schaltungspunkt des Verstärkers, der zu einem Verstärkereingangssignal ein gegenphasiges Signal führt, ein Rückkopplungswiderstand vorgesehen ist, ist aus "TRANSIMPEDANZ OPTICAL PREAMPLIFIER HAVING A COMMON COLLECTOR FRONT END", abgedruckt in Electronics Letters V01. 18, No. 23, vom 11.11.82, bekannt.

Aus der britischen Patentanmeldung GB 2 083 963 ist ein Empfänger mit einer aus zwei antiparallel geschalteten Dioden bestehenden Brückenschaltung zwischen einem Verstärker und einem Komparator bekannt, durch die der Dynamikbereich des Empfängers vergrößert werden soll.

Der Erfindung liegt die Aufgabe zugrunde, einen Empfänger der eingangs genannten Art derart auszugestalten, daß die Eingänge des Komparators nicht übersteuert werden, und daß ein eindeutiger Zusammenhang zwischen dem Ausgangspotential des Komparators und dem von der Fotodiode empfangenen optischen Digitalsignal besteht.

Diese Aufgabe wird erfindungsgemäß durch die im Patentanspruch 1 angegebenen Merkmale gelöst.

Ein Vorteil des erfindungsgemäßen Empfängers für optische Digitalsignale besteht darin, daß der logische Zustand an seinem Datenausgang aufgrund der Gleichstromkopplung zwischen dem Verstärkerausgang und dem Komparator eindeutig dem Belichtungszustand der Fotodiode zugeordnet ist, daß der Komparator aufgrund seiner Eingangsbeschaltung mit den Dioden für kleine Signale eine hohe Empfindlichkeit aufweist, und daß aufgrund der zusätzlichen Wechselstromkopplung zwischen dem Komparator und dem Transimpedanz-Verstärker ein schnelles Schalten gewährleistet ist.

Es ist weiter vorteilhaft, wenn den beiden Eingängen des Komparators jeweils zueinander inverse Ausgangssignale des Transimpedanz-Verstärkers zugeführt werden.

Es ist weiter vorteilhaft, wenn die Referenzspannung für den Komparator durch einen Operationsverstärker und einen Spannungsteiler erzeugt wird, da hierdurch die Fotodiode nicht belastet wird.

Es ist weiter vorteilhaft, wenn in Serie zu den Dioden am Komparatoreingang eine Drossel geschaltet ist, da hierdurch das differenzierte Signal auch wenn dessen Amplitude deutlich größer ist als die Flußspannung einer Diode — nicht durch die niedrige Impedanz einer in Flußrichtung gepolten Diode belastet wird.

Es ist wiederum vorteilhaft, wenn die Drossel durch einen Widerstand aperiodisch bedämpft wird.

Im folgenden wird die Erfindung anhand eines in der Zeichnung dargestellten Ausführungsbeispieles erläutert.

Dabei zeigen

Fig. 1 den erfindungsgemäßen Empfänger für optische Digitalsignale, die mit unterschiedlicher Amplitude an der Fotodiode einteffen können,

Fig. 2 eine andere Ausgestaltung des erfindungsgemäßen Empfängers, und

Fig. 3 eine weitere Eingangsbeschaltung des Komparators im Empfänger.

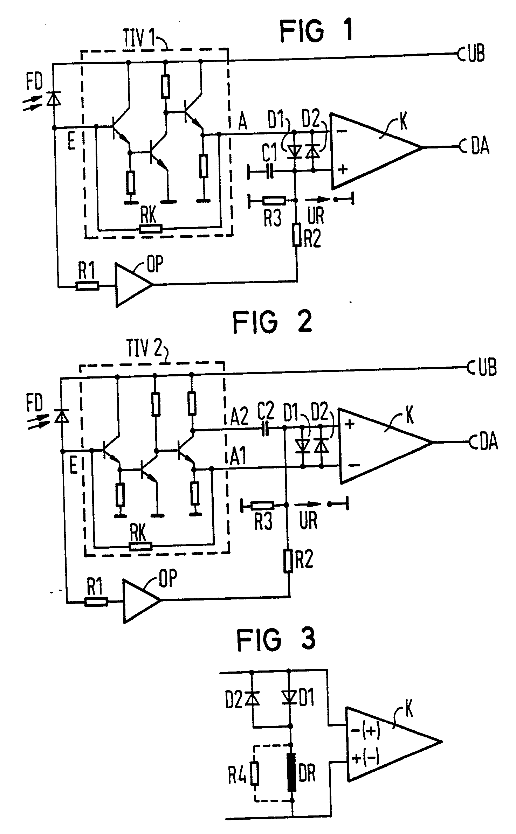

Im einzelnen ist in Fig. 1 ein erster Transimpedanz-Verstärker TIV 1 dargestellt, der drei Verstärkerstufen aufweist, die jeweils einen Transistor enthalten. Die Transistoren sind hierbei nicht näher bezeichnet. Der erste Transistor ist in Kollektor-Basisschaltung betrieben und in seinen Basis-Kollektoreingangskreis ist eine Fotodiode FD eingefügt, über die der erste Transistor über einen Eingang E zunehmend Basisstrom erhält, wenn die Fotodiode FD durch ein optisches Signal belichtet wird.

Der zweite Transistor ist in Emitter-Basisschaltung betrieben und wird daher synchron zum ersten Transistor, mit dessen emitterseitigem Anschluß die Basiselektrode dieses zweiten Transistors verbunden ist, zunehmend leitend, wenn die Intensität des auf die Fotodiode FD einwirkenden optischen Signals zunimmt.

Der dritte Transistor ist in Kollektor-Basisschaltung betrieben und mit seiner Basiselektrode an einem kollektorseitigen Abgriff des zweiten Transistors angeschlossen.

An einem emitterseitigen Abgriff des dritten Transistors wird über einen Ausgang A die nicht näher bezeichnete Ausgangsspannung des ersten Transimpedanz-Verstärkers TIV 1 abgenommen.

Der Ausgang A, der über einen Rückkopplungswiderstand RK mit dem Eingang E verbunden ist, ist beispielsweise mit einem invertierenden Eingang eines Komparators K verbunden. Am nichtinvertierenden Eingang des Komparators K sind gegen Masse ein erster Kondensator C1 und ein dritter Widerstand R3 angeschaltet. Weiter sind zwischen die beiden Eingänge des Komparators K, der einen Datenausgang DA aufweist, zwei antiparallel geschaltete Dioden D1, D2 geschaltet.

Der Eingang E des ersten Transimpedanz-Verstärkers TIV 1 ist über einen ersten Widerstand R1 mit einem Operationsverstärker OP verbunden, dessen Ausgang über einen aus einem zweiten Widerstand R2 und dem dritten Widerstand R3 gebildeten Spannungsteiler mit Masse verbunden ist. Der Spannungsteilerpunkt, an dem eine Referenzspannung UR abgreifbar ist, ist mit dem nichtinvertierenden Eingang des Komparators K verbunden. Der Operationsverstärker OP ist als Spannungsfolger mit dem Verstärkungsfaktor 1 geschaltet.

Die in Fig. 2 dargestellte Schaltungsanordnung entspricht weitgehend der in Fig. 1 dargestellten. Der in Fig. 2 dargestellte zweite Transimpedanz-Verstärker TIV 2 unterscheidet sich von dem ersten Transimpedanzverstärker TIV 1 durch den zusätzlich in den Kollektorkreis des dritten Transistors eingefügten nicht näher bezeichneten Widerstand. Der kollektorseitige Abgriff des dritten Transistors der dritten Verstärkerstufe bildet hierbei einen zweiten Ausgang A2, und der emitterseitige Abgriff einen ersten Ausgang A1. Diese entspricht wiederum dem Ausgang A in Fig. 1.

Der zweite Ausgang A2 ist über einen zweiten Kondensator C2 mit dem nichtinvertierenden Eingang des Komparators K verbunden. Der erste Ausgang A1 ist am invertierenden Eingang des Komparators K angeschaltet, und zwischen die Eingänge des Komparators K sind wiederum die beiden antiparallelen Dioden D1, D2 geschaltet. Am nichtinvertierenden Eingang des Komparators K liegt wiederum die Referenzspannung UR an. Die sonstige Beschaltung des Operationsverstärkers OP entspricht der in Fig. 1 dargestellten.

Der Transimpedanz-Verstärker TIV 1 bzw. TIV 2 kann auch durch einen rückgekoppelten Operationsverstärker realisiert sein (siehe die eingangs zitierte EP-Patentanmeldung). Bei der Realisierung des in Fig. 2 dargestellten zweiten Transimpedanz-Verstärkers TIV 2 muß der Operationsverstärker zwei Abgriffe aufweisen, an denen zueinander inverse Ausgangssignale abgegriffen werden können.

Die Fotodiode FD arbeitet auf den Eingang des Transimpedanz-Verstärkers TIV (das Bezugszeichen bezieht sich auf den ersten bzw. zweiten Transimpedanz-Verstärker TIV 1, TIV 2). Ein Transimpedanz-Verstärker wandelt eine Eingangsstromänderung in eine Ausgangsspannungsänderung um. Die Ausgangsspannung wird dem invertierenden Eingang des Komparators K (es handelt sich hierbei um einen Spannungs-Komparator) zugeführt.

Die vom Operationsverstärker OP über den aus dem zweiten und dritten Widerstand R2, R3 gebildeten Spannungsteiler abgegebene Referenzspannung UR liegt beispielsweise 50 mV unterhalb der von dem Ausgang A bzw. A1 abgegebenen Ausgangs-Ruhespannung des Transimpedanz-Verstärkers TIV 1 bzw. TIV 2 im unbelichteten Zustand der Fotodiode FD. Der Operationsverstärker OP weist einen hohen Eingangswiderstand auf, so daß keine merkliche Belastung der Fotodiode FD bzw. keine Erhöhung des Sperrstromes der Fotodiode FD bewirkt wird.

Der erste Widerstand R1 entkoppelt die Fotodiode FD hochfrequenzmäßig von dem kapazitiven Eingang des Operationsverstärkers OP. Wenn der Wert des ersten Widerstands R1 so gewählt ist, daß dieser viel kleiner ist als der Eingangswiderstand des Operationsverstärkers OP, so ist die Spannung am Eingang E des Transimpedanz-Verstärkers TIV 1 bzw. TIV 2 gleich der Spannung am Ausgang des Operationsverstärkers OP. Bei einer vorteilhaften Ausgestaltung ist weiter der Wert des ersten Widerstandes R1 viel größer als der Quotient aus der minimalen Dauer eines empfangenen Bits und dem $2\pi$-fachen der effektiven Eingangskapazität des Operationsverstärkers OP.

Weiter ändert sich die über den Operationsverstärker OP erzeugte Referenzspannung UR bei Schwankungen der Betriebsspannung UB in gleicher Weise wie die an dem Eingang- bzw. Ausgang E, A, A 1 abgegebene Ruhespannung. Auf diese Weise wird ein ungewolltes Umschalten des Zustandes am Datenausgang DA des Komparators K verhindert.

Wenn die Fotodiode FD durch einen Lichtimpuls belichtet wird, so verringert sich die Ausgangsspannung des Transimpedanz-Verstärkers TIV, und wenn die Ausgangsspannung des Transimpedanz-Verstärkers TIV die Referenzspannung UR unterschreitet, so schaltet der Komparator K an seinem Datenausgang DA auf logisch "1". Im Ruhezustand, d.h. bei einer unbelichteten Fotodiode FD wird vom Datenausgang DA eine logische "0" abgegeben.

Zur Einstellung eines Korrekturstromes, der die Abhängigkeit der Referenzspannung UR von der Temperatur kompensiert, kann der dritte Widerstand R3 durch einen temperaturabhängigen Widerstand realisiert sein.

Weiter kann zur Kompensation von Schwankungen der Betriebsspannung UB ein zusätzlicher, spannungsabhängiger Widerstand vorgesehen sein, der an der Betriebsspannung UB einerseits und am Spannungsteilerpunkt zwischen dem zweiten und dritten Widerstand R2, R3 andererseits angeschaltet ist.

Die Erfindung besteht darin, daß das Ausgangssignal des Transimpedanz-Verstärkers TIV 1 (siehe Fig. 1) bzw. TIV 2 (siehe Fig. 2) in einer gemischten Gleichstrom-Wechselstromkopplung den Eingängen des Komparators K zugeführt wird. Der erste Kondensator Cl (siehe Fig. 1) bzw. der zweite Kondensator C2 (siehe Fig. 2) bildet jeweils zusammen mit dem zweiten Widerstand R2 ein Differenzierglied. Die Zeitkonstante dieses Differenziergliedes ist dabei so bemessen, daß sie klein ist, verglichen mit der minimal übertragenen Impulsdauer, d.h. der von der Fotodiode FD empfangenen Lichtimpulse.

Bei dem in Fig. 1 dargestellten Beispiel dient die Verbindung zwischen dem Anschluß A des ersten Transimpedanz-Verstärkers TIV 1 mit dem invertierenden Eingang des Komparators K zur Gleichstrom- und zur Wechselstromansteuerung. Hierdurch bleibt der Vorteil des gleichstromgekoppelten Empfängers erhalten, bei dem das vom Datenausgang DA abgegebene Ausgangssignal eindeutig dem an der Eingangsklemme E des ersten Transimpedanz-Verstärkers TIV 1 anliegenden Eingangssignal zugeordnet ist. Durch das über den ersten Kondensator C1 und den zweiten Widerstand R2 differenzierte Wechselstromsignal (das dem Gleichstromsignal überlagert ist) wird ein schnelles Umschalten des Komparators K bewirkt.

Bei dem in Fig. 2 dargestellten Beispiel ist ein Gleichstrompfad vorgesehen, der von dem ersten Anschluß A1 des zweiten Transimpedanz-Verstärkers TIV 2 über den invertierenden Eingang des Komparators K verläuft und es ist ein Wechselstrompfad vorgesehen, der den zweiten Anschluß A2 über den zweiten Kondensator C2 mit dem nichtinvertierenden Eingang des Komparators K verbindet.

Weiter wird eine Begrenzung der am Komparator K anliegenden Spannung durch die zwischen die Eingänge des Komparators K geschalteten, antiparallelen Dioden D1, D2 bewirkt. Die Dioden D1, D2 können zur Erzeugung einer besonders niedrigen Spannung zwischen den Eingängen des Komparators K durch sogenannte Schottky-Dioden realisiert sein. Diese durch die Dioden D1, D2 begrenzte Spannung reicht aber für ein einwandfreies Schalten des Komparators K aus.

In Fig. 3 sind die Eingänge des Komparators K dargestellt, wobei in Serie zu den beiden antiparallel geschalteten Dioden D1, D2 eine Drossel DR geschaltet wurde. Parallel zur Drossel DR ist bedarfsweise ein vierter Widerstand R4 geschaltet. Durch die in Serie zu den antiparallel geschalteten Dioden D1, D2 geschaltete Drossel DR wird eine Belastung des am invertierenden bzw. nichtinvertierenden Eingang des Komparators K anliegenden differenzierten Signals durch die niedrige Impedanz einer in Flußrichtung gepolten Diode D1 bzw. D2 verhindert, wodurch ein schnelleres Ansprechen des Komparators K erzielt wird, weil kurzzeitig eine Spannung anliegt, die größer ist als die durch die antiparallelen Dioden D1, D2 begrenzte Spannung.

Über den vierten Widerstand R4 kann die Drossel DR aperiodisch so bedämpft werden, daß zusammen mit dem ersten Kondensator (siehe Fig. 1) bzw. mit dem zweiten Kondensator C2 (siehe Fig. 2) keine Schwingungen auftreten können.

**Patentansprüche**

1. Empfänger für optische Digitalsignale mit unterschiedlicher Amplitude, mit einem Transimpedanz-Verstärker (TIV), an dessen Eingang (E) eine Fotodiode (FD) angeschaltet ist, und dessen Ausgang (A) an dem einen Eingang eines Komparators (K) angeschaltet ist, gekennzeichnet durch zwischen die Eingänge des Komparators (K) antiparallel geschaltete Dioden (D1, D2), durch eine an einem komplementären Eingang des Komparators (K) angeschaltete Referenzspannung (UR), durch eine Kapazität (C1 in Fig. 1), die ebenfalls am komplementären Eingang des Komparators (K) angeschaltet ist, sowie dadurch, daß der Eingang (E) des Transimpedanz-Verstärkers (TIV) mit einem Eingang eines Operationsverstärkers (OP) verbunden ist, der an seinem Ausgang über einen aus dem Widerstand (R2) und einem weiteren Widerstand (R3) gebildeten Spannungsteiler die Referenzspannung (UR) abgibt, wobei der Operationsverstärker (OP) als Spannungsfolger mit dem Verstärkungsfaktor 1 geschaltet ist und dadurch, daß der Operationsverstärker (OP) durch einen zusätzlichen Widerstand (R1) hochfrequenzmäßig vom Eingang (E) des Transimpedanz-Verstärkers (TIV) entkoppelt ist, wobei dieser Widerstand (R1) derart bemessen ist, daß sein Wert einerseits viel kleiner ist als der Eingangswiderstand des Operationsverstärkers (OP), und andererseits viel größer ist als der Quotient aus der minimalen Dauer eines empfangenen Bits und dem $2\pi$-fachen der effektiven Eingangskapazität des Operationsverstärkers (OP).

2. Empfänger für optische Digitalsignale gemäß Anspruch 1 dadurch gekennzeichnet, daß über die Kapazität (C2 in Fig. 2) ein Signal dem komplementären Eingang des Komparators (K) zugeführt wird, das zu dem ersten Ausgangssignal des Transimpedanz-Verstärkers (TIV) invers ist.

3. Empfänger für optische Digitalsignale gemäß Anspruch 1 oder 2, dadurch gekennzeichnet, daß eines der beiden, zueinander inversen, den Eingängen des Komparators (K) zugeführten Signale am Kollektor, und das andere Signal am Emitter eines Transistors abgegriffen wird, der die Ausgangsstufe des Transimpedanz-Verstärkers (TIV) bildet.

4. Empfänger für optische Digitalsignale nach einem der Ansprüche 1 bis 3, dadurch gekennzeichnet, daß die Dioden (D1, D2) durch Schottky-Dioden realisiert sind.

5. Empfänger für optische Digitalsignale nach einem der Ansprüche 1 bis 4, dadurch gekennzeichnet, daß in Serie zu den Dioden (D1, D2) eine Drossel (DR) geschaltet ist.

6. Empfänger für optische Digitalsignale nach Anspruch 5, dadurch gekennzeichnet, daß parallel zur Drossel (DR) ein zusätzlicher Widerstand (R4) geschaltet ist.

**Revendications**

1. Récepteur pour signaux optiques numériques possédant des amplitudes différentes, et comportant un amplificateur d'impédance transitoire (TIV), à l'entrée (E) duquel est raccordée une photodiode (FD) et dont la sortie (A) est raccordée à une entrée d'un comparateur (K), caractérisé par des diodes (D1, D2) branchées selon un montage antiparallèle entre les entrées du comparateur (K), une tension de référence (UR) appliquée à une entrée complémentaire du comparateur (K), une capacité (C1 sur la figure 1), qui est également raccordée à l'entrée complémentaire du comparateur (K), et par le fait que l'entrée (E) de l'amplificateur d'impédance transitoire (TIV) est reliée à une entrée d'un amplificateur opérationnel (OP), qui délivre, sur sa sortie, la tension de référence (UR), par l'intermédiaire d'un diviseur de tension formé par la résistance (R2) et par une autre résistance (R3), l'amplificateur opérationnel (OP) étant réalisé sous la forme d'un suiveur de tension possédant un facteur d'amplification 1, et par le fait que l'amplificateur opérationnel (OP) est découplé, du point de vue des hautes fréquences, par rapport à l'entrée (E) de l'amplificateur d'impédance transitoire (TIV), par une résistance supplémentaire (R1), qui est dimensionnée de manière que sa valeur soit d'une part très inférieure à la résistance d'entrée de l'amplificateur opérationnel (OP) et, d'autre part, soit nettement supérieure au quotient de la durée minimale d'un bit reçu par $2\pi$ fois la capacité effective d'entrée de l'amplificateur opérationnel (OP).

2. Récepteur pour des signaux optiques numériques suivant la revendication 1, caractérisé par le fait qu'à l'entrée complémentaire du comparateur (K) est envoyé, par l'intermédiaire de la capacité (C2 sur la figure 2), un signal qui est inverse du premier signal de sortie de l'amplificateur d'impédance transitoire (TIV).

3. Récepteur pour des signaux optiques numériques suivant la revendication 1 ou 2, caractérisé par le fait que l'un des deux signaux, inverses l'un de l'autre, envoyés aux entrées du comparateur (K) est prélevé sur le collecteur et l'autre signal sur l'émetteur d'un transistor, qui constitue l'étage de sortie de l'amplificateur d'impédance transitoire (TIV).

4. Récepteur pour des signaux optiques numériques suivant l'une des revendications 1 à 3, caractérisé par le fait que les diodes (D1, D2) sont constituées par des diodes Schottky.

5. Récepteur pour des signaux optiques numériques suivant l'une des revendications 1 à 4, caractérisé par le fait qu'une bobine d'arrêt (DR) est branchée en série avec les diodes (D1, D2).

6. Récepteur pour des signaux optiques numériques suivant la revendication 5, caractérisé par le fait qu'une résistance additionnelle (R4) est branchée en parallèle avec la bobine d'arrêt (DR).

**Claims**

1. Receiver for optical digital signals with various amplitudes, having a transimpedance amplifier (TIV) to the input (E) of which there is connected a photodiode (FD) and the output (A) of which is connected to the one input of a comparator (K), characterised by diodes (D1, D2) connected antiparallel between the inputs of the comparator (K), by a reference voltage (UR) connected at a complementary input of the comparator (K), by a capacitance (C1 in Fig. 1) which is also connected at the complementary input of the comparator (K), and also by the fact that the input (E) of the transimpedance amplifier (TIV) is connected to an input of an operational amplifier (OP) which gives out the reference voltage (UR) at its output by means of a voltage divider formed by the resistance (R2) and a further resistance (R3), whereby the operational amplifier (OP) is connected as a voltage follower with the amplification factor 1 and by the fact that the operational amplifier (OP) is decoupled as regards high frequencies from the input (E) of the transimpedance amplifier (TIV) by an additional resistance (R1), the magnitude of this resistance (R1) being such that its value on the one hand is much smaller than the input resistance of the operational amplifier (OP), and on the other hand is much greater than the quotient of the minimum duration of a received bit and $2\pi$ times the effective input capacitance of the operational amplifier (OP).

2. Receiver for optical digital signals according to claim 1, characterised in that by means of the capacitance (C2 in Fig. 2) a signal is conveyed to the complementary input of the comparator (K) which is inverse to the first output signal of the transimpedance amplifier (TIV).

3. Receiver for optical digital signals according to claim 1 or 2, characterised in that one of the two signals which are inverse to each other and conveyed to the inputs of the comparator (K) is taken from the collector, and the other signal is taken from the emitter of a transistor which forms the output stage of the transimpedance amplifier (TIV).

4. Receiver for optical digital signals according to one of claims 1 to 3, characterised in that the diodes (D1, D2) are constituted by Schottky diodes.

5. Receiver for optical digital signals according to one of claims 1 to 4, characterised in that a choke (DR) is connected in series with the diodes (D1, D2).

6. Receiver for optical digital signals according to claim 5, characterised in that an additional resistance (R4) is connected in parallel to the choke (DR).

FIG 1

FIG 2

FIG 3